# EUROPÄISCHE PATENTANMELDUNG

(11) **EP 3 093 058 A1**
(43) Veröffentlichungstag der Anmeldung: **16.11.2016**
(21) Anmeldenummer: 16166520.3
(22) Anmeldetag: 22.04.2016
(51) Int. Cl.: B01D 46/00, B01D 46/10, B01D 46/52

(54) **FILTERELEMENT FÜR EINE FILTEREINRICHTUNG**

(30) Priorität: 13.05.2015 DE 102015006027
(71) Anmelder: MANN + HUMMEL GMBH, 71638 Ludwigsburg (DE)
(72) Erfinder: Kaufmann, Michael, 67149 Meckenheim (DE); Schmid, Daniel, 74343 Sachsenheim (DE); Wagner, Fabian, 71696 Möglingen (DE); Epli, Sven, 74078 Heilbronn (DE); Maier, Michael, 94419 Reisbach (DE); Rabanter, Anton, 84163 Marklkofen (DE); Keßler, Stephan, 94419 Reisbach (DE); Hasenfratz, Robert, 71334 Waiblingen (DE); Hanselmann, Markus, 74348 Lauffen (DE); Nguyen, Duc Cuong, 30880 Laatzen (DE); Biesinger, Lars, 71686 Remseck (DE); Stürner, Johannes, 70193 Stuttgart (DE); Pekny, Peter, 95213 Münchberg (DE)
(74) Vertreter: Seyboth, Matthias

(57) **Zusammenfassung**

Ein Filterelement für eine Filtereinrichtung weist einen faltenförmigen, gekrümmten Federmediumkörper auf, wobei die V-förmig ausgebildeten Falten in der Weise zueinander ausgerichtet sind, dass innerhalb der V-Form der Falten liegende Achsen parallel zueinander verlaufen.

## Beschreibung

### Technisches Gebiet

Die Erfindung bezieht sich auf ein Filterelement für eine Filtereinrichtung, insbesondere einen Luftfilter, nach dem Oberbegriff des Anspruches 1.

### Stand der Technik

Aus der EP 0 824 950 A1 ist ein als Filtereinsatz für eine Luftfiltration ausgeführtes Filterelement bekannt, das als Faltenfilter ausgebildet ist, dessen Faltenspitzen die Anström- und die Abströmseite bilden. Das Filterelement ist quaderförmig ausgeführt, so dass die Anström- und Abströmseite jeweils in einer Ebene und parallel zueinander liegen. Zur Stabilisierung des aus einem Vliesmaterial bestehenden Filterelements läuft an dem Filtermediumkörper des Filterelements ein Kunststoffrahmen um, dessen Kunststoff bei der Herstellung in die Falten eingespritzt wird.

Darüber hinaus sind gekrümmt ausgeführte Filterelemente mit einem faltenförmigen Filtermediumkörper bekannt. Die Krümmung erlaubt es, den Filtermediumkörper an verschiedene Einbaugeometrien anzupassen. Auch in diesem Fall ist üblicherweise ein umlaufender Kunststoffrahmen angespritzt.

### Offenbarung der Erfindung

Der Erfindung liegt die Aufgabe zugrunde, ein gleichmäßig durchströmbares Filterelement mit einem faltenförmigen, gekrümmten Filtermediumkörper so auszubilden, dass ein Filterrahmen am Filtermediumkörper in einfacher Weise hergestellt und mit dem Filtermediumkörper verbunden werden kann.

Diese Aufgabe wird erfindungsgemäß mit den Merkmalen des Anspruches 1 gelöst. Die Unteransprüche geben zweckmäßige Weiterbildungen an.

Das erfindungsgemäße Filterelement für eine Filtereinrichtung kann zum Beispiel als Luftfilter eingesetzt werden, beispielsweise zur Filtration der Verbrennungsluft einer Brennkraftmaschine oder der einem Innenraum zuzuführenden Luft. Es sind aber auch Anwendungen allgemein zur Gasfiltration oder zur Flüssigkeitsfiltration möglich.

Das Filterelement ist in ein aufnehmendes Filtergehäuse einsetzbar, das gemeinsam mit dem Filterelement Bestandteil einer Filtereinrichtung ist.

Das Filterelement umfasst einen Filtermediumkörper, an dem die Filtration stattfindet und der als Faltenfilter ausgeführt ist. Der Filtermediumkörper weist eine gekrümmte Kontur auf, so dass die Anströmseite und die Abströmseite, die an den gegenüberliegenden Stirnkanten der Falten liegen, jeweils gekrümmt ausgebildet sind. Der Filtermediumkörper ist vorzugsweise blockförmig ausgebildet, so dass die beiden Stirnseiten des Filtermediumkörpers, welche die Anström- und die Abströmseite begrenzen, auf gegenüberliegenden Seiten liegen.

Der Filtermediumkörper weist eine Krümmung auf, die um eine virtuelle Achse parallel zur Faltenlängserstreckung gerichtet ist. Die Krümmung verläuft in der Weise, dass Filtertaschenachsen, die von der V-Form der Falten (Filtertaschen) begrenzt werden und innerhalb jeder V-Form in gleicher Winkelposition liegen, parallel zueinander verlaufen. Es sind beispielsweise die Winkelhalbierenden durch die V-Form der Falten parallel zueinander ausgerichtet. In einer vorteilhaften Ausführung liegen sowohl die Filtertaschenachsen entlang der ersten Seitenfläche der V-Form der Falten parallel zueinander als auch die Filtertaschenachsen entlang der zweiten Seitenfläche der V-Form der Falten.

Der Filtermediumkörper ist von einem Filterrahmen eingefasst, der als Kunststoff-Spritzgießbauteil ausgeführt und an den Filtermediumkörper angespritzt, beispielsweise in die Falten des Filtermediumkörpers eingespritzt ist. Der Filterrahmen erstreckt sich entweder nur orthogonal zur Längsrichtung der Falten an den Filtermediumkörper-Längsseiten oder ist umlaufend ausgebildet. Der Filterrahmen verleiht dem Filtermediumkörper eine verbesserte Stabilität, so dass das Filterelement mit dem Filtermediumkörper und dem Filterrahmen insbesondere eigenstabil ausgebildet ist und die gekrümmte Form auch ohne Einwirkung äußerer Kräfte beibehält.

Die Falten des gekrümmten Filtermediumkörpers sind in der Weise zueinander ausgerichtet sind, dass Faltentaschenachsen durch diejenigen V-förmigen, benachbarten Faltentaschen, welche zur gleichen Seite des Filtermediumkörpers geöffnet sind, parallel zueinander verlaufen. Die Faltentaschenachsen, die jeweils innerhalb der Faltentaschen liegen, verlaufen somit auch parallel zur Entformrichtung des Spritzgusswerkzeugs, mittels dessen der Filterrahmen angeformt ist. Diese Ausführung hat den Vorteil, dass trotz der Krümmung des Filterelements ein in die Faltentaschen eingreifendes, beispielsweise kammartiges Spritzgusswerkzeug nach dem Anspritzen des Filterrahmens an den Filtermediumkörper in Entformungsrichtung aus den Falten problemlos wieder entfernt werden kann.

Aufgrund der achsparallelen Ausrichtung der Falten können kammartige Elemente wie das Spritzwerkzeug in Achsrichtung eingeführt bzw. in entgegengesetzter Richtung entfernt werden. Bei Ausführungen aus dem Stand der Technik mit gekrümmten Faltenfiltern weisen die Achsen durch die V-förmigen Falten, insbesondere die Winkelhalbierenden üblicherweise einen Winkel zueinander auf und schneiden sich in einem gemeinsamen Schnittpunkt, was das Einführen und Entfernen von Spritzwerkzeugen erschwert und ggf. unmöglich macht.

Ein weiterer Vorteil der achsparallelen Ausrichtung der Falten des gekrümmten Filtermediumkörpers liegt in der verbesserten gleichmäßigen Anströmung und Abströmung des zu reinigenden Fluids. Aufgrund der achsparallelen Ausrichtung ist eine einheitliche Anströmungs- und Durchströmungsrichtung durch den Filtermediumkörper ohne Umlenkung der Strömung gegeben.

Die Faltentaschen, innerhalb denen die Faltentaschenachsen parallel verlaufen, sind zur gleichen Seite des Filtermediumkörpers geöffnet, vorzugsweise zur nach innen gekrümmten Seite hin, ggf. zur nach außen gekrümmten Seite hin.

Gemäß einer weiteren vorteilhaften Ausführung verlaufen die parallelen Faltentaschenachsen jeweils durch den Faltengrund der Faltentaschen. Die Faltentaschenachsen liegen innerhalb der Faltentaschen entweder mit Abstand zu den Wandungen der Faltentaschen oder liegen genau auf einer Wandung der Faltentasche,

Gemäß noch einer weiteren vorteilhaften Ausführung verlaufen die parallelen Faltentaschenachsen zwischen den Faltenspitzen unmittelbar benachbarter Faltentaschen, die in entgegengesetzter Richtung geöffnet sind.

Gemäß noch einer weiteren vorteilhaften Ausführung entspricht der Höhenversatz des Filterelements, der durch die Krümmung entsteht, mindestens einer halben Faltenhöhe. Ggf. kann der Höhenversatz auch ein Mehrfaches einer Faltenhöhe betragen.

Es kann ggf. ausreichend sein, lediglich über einen Teilbereich des Filtermediumkörpers V-förmige Falten mit achsparalleler Ausrichtung in einem gekrümmten Abschnitt des Filtermediumkörpers vorzusehen. Die angrenzenden Abschnitte unterliegen nicht der Bedingung und können zueinander winklige Achsen aufweisen. Des Weiteren ist es möglich, zwei oder mehr Abschnitte im Filtermediumkörper mit jeweils achsparalleler Ausrichtung vorzusehen, wobei jedoch die Achsen zwischen den Abschnitten zueinander winklig verlaufen.

Gemäß noch einer vorteilhaften Ausführung ist der gesamte, gekrümmte Filtermediumkörper so ausgeführt, dass die Achsen durch sämtliche Falten parallel zueinander verlaufen. Dies ermöglicht es, beispielsweise einen Filterrahmen über die gesamte Länge des Filtermediumkörpers im Spritzgießverfahren einzubringen.

Das Filterelement mit dem gekrümmten Filtermediumkörper kann in verschiedenartigen konstruktiven Ausführungen vorliegen, bei denen zumindest ein Abschnitt der Falten mit parallel ausgerichteten Winkelhalbierenden ausgeführt ist. Es kommen insbesondere Ausführungen des Filtermediumkörpers mit konstantem Winkel der V-Form über einen Abschnitt oder die gesamte Länge des Filtermediumkörpers in Betracht. Ggf. kann sich aber der Winkel der V-förmigen Falten in verschiedenen Abschnitten des Filtermediumkörpers voneinander unterscheiden. Die Krümmung des Filterelements kann konstant oder über die Länge veränderlich sein.

Des Weiteren kommen sowohl Filtermedienkörper mit einer konstanten Dicke über einen Teilbereich oder die gesamte Länge als auch Filtermedienkörper mit einer sich ändernden Dicke in einem Teilbereich oder über die gesamte Länge in Betracht. Bei konstanter Dicke verlaufen die Anström- und die Abströmseite parallel bzw. konzentrisch zueinander, wohingegen bei veränderlicher Dicke die Anström- und Abströmseite nichtparallel zueinander verlaufen. Es sind auch Kombinationen von Abschnitten mit konstanter Dicke und Abschnitten unterschiedlicher Dicke möglich.

Gemäß noch einer weiteren vorteilhaften Ausführung ist in den Filterrahmen mindestens eine Einkerbung eingebracht, mit der das Filterelement beispielsweise auf einem Träger oder dgl. aufsitzt. Die Einkerbung wird von einer Falte des Filtermediumkörpers überbrückt, die bevorzugt einen größeren Winkel als die angrenzenden Falten aufweist.

Das Filterelement kann an unterschiedliche Einbausituationen angepasst werden. Die gekrümmte Form erlaubt ein Einsetzen des Filterelements in nicht-quaderförmige Einbauräume.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 ein Filterelement für eine Filtereinrichtung, mit einem faltenförmigen und gekrümmt ausgeführten Filtermediumkörper konstanter Dicke, der von einem umlaufenden Filterrahmen eingefasst ist,
Fig. 2 das Filterelement in einem Längsschnitt,
Fig. 3 ein Längsschnitt entsprechend Fig. 2, jedoch in vergrößerter Ansicht,
Fig. 4 ein Filterelement in einer modifizierten Ausführung mit einer sich über die Länge des Filterelementes ändernden Dicke,
Fig. 5 das Filterelement gemäß Fig. 4 im Längsschnitt,
Fig. 6 ein weiteres Ausführungsbeispiel, bei dem an der Innenseite des gekrümmten Filterelementes eine Einkerbung angebracht ist,
Fig. 7 das Ausführungsbeispiel gemäß Fig. 6 im Längsschnitt.

In den Figuren sind gleiche Bauteile mit gleichen Bezugszeichen versehen.

### Ausführungsform(en) der Erfindung

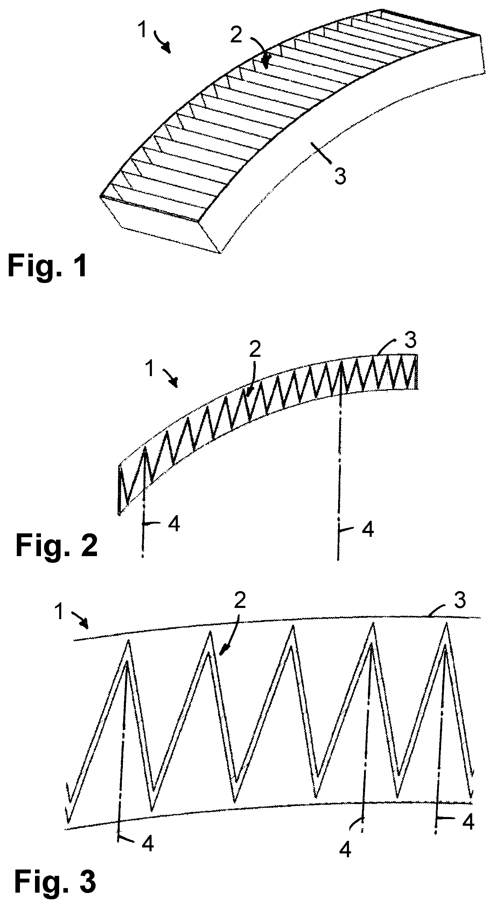

In den Fig. 1 bis 3 ist ein erstes Ausführungsbeispiel mit einem Filterelement 1 dargestellt, das als Bestandteil einer Filtereinrichtung in ein Filtergehäuse einsetzbar und von einem zu filtrierenden Fluid durchströmbar ist. Das Filterelement wird beispielsweise für einen Luftfilter für ein Kraftfahrzeug verwendet.

Das Filterelement 1 umfasst einen Filtermediumkörper 2 und einen am Filtermediumkörper 2 umlaufenden Filterrahmen 3, der als Kunststoff-Spritzgussbauteil ausgeführt ist. Der Filtermediumkörper 2 ist faltenförmig ausgebildet und weist eine Vielzahl von Filterfalten mit zwischenliegenden Faltentaschen auf, die sich quer zur Längsrichtung des quaderförmigen, gekrümmten Filtermediumkörpers 2 erstrecken.

Der Filtermediumkörper 2 ist gekrümmt ausgeführt und weist über seine axiale Länge - quer zur Faltenlängserstreckung gesehen - eine nicht-konstante Krümmung auf. Im Bereich des rechten Bildrandes in Fig. 1 und 2 ist die Krümmung des Filtermediumkörpers 2 geringer als im Bereich des linken Bildrandes.

Wie den Fig. 2 und 3 zu entnehmen, sind die Falten des Filtermediumkörpers 2 so zueinander ausgerichtet, dass die Winkelhalbierenden 4 durch die V-förmigen Faltentaschen parallel zueinander stehen. Dies wird dadurch erreicht, dass der blockförmige Filtermediumkörper, der über seine axiale Länge eine konstante Dicke aufweist, im Bereich der geringeren Krümmung am rechten Bildrand enger stehende Falten mit einem kleineren Öffnungswinkel der V-Form aufweist als im Bereich des linken Bildrandes, wo die Krümmung stärker ist und die Faltentaschen entsprechend einen größeren Winkel der V-Form besitzen. Sowohl die Winkelhalbierenden durch die der Anströmseite zugewandten Faltentaschen als auch die Winkelhalbierenden der zur Abströmseite geöffneten Faltentaschen liegen parallel zueinander.

Diese Ausführung hat den Vorteil, dass über den gesamten Anström- und Abströmquerschnitt des Filterelementes 1 eine einheitliche Anströmungs-, Durchströmungs- und Abströmungsrichtung entlang der Winkelhalbierenden 4 gegeben ist. Es bestehen somit keine unterschiedlichen Strömungswinkel im Bereich der Anström- und Abströmfläche.

Des Weiteren ist die Ausrichtung der Falten mit parallelen Winkelhalbierenden im Hinblick auf das Einbringen des stabilisierenden Filterrahmens 3 vorteilhaft, der im Wege des Spritzgießens in die Falten des Filtermediumkörpers 2 eingespritzt wird. Dies erfolgt mithilfe eines kammartigen Werkzeugs, das beim Herstellungsprozess in die Faltentaschen eingreift und nach dem Einspritzen des Kunststoffes wieder aus den Faltentaschen herausgezogen wird. Aufgrund der Parallelität der Winkelhalbierenden 4 in den Faltentaschen des Filtermediumkörpers sind das Einfahren und das Entfernen des kammartigen Spritzwerkzeugs ohne weiteres möglich.

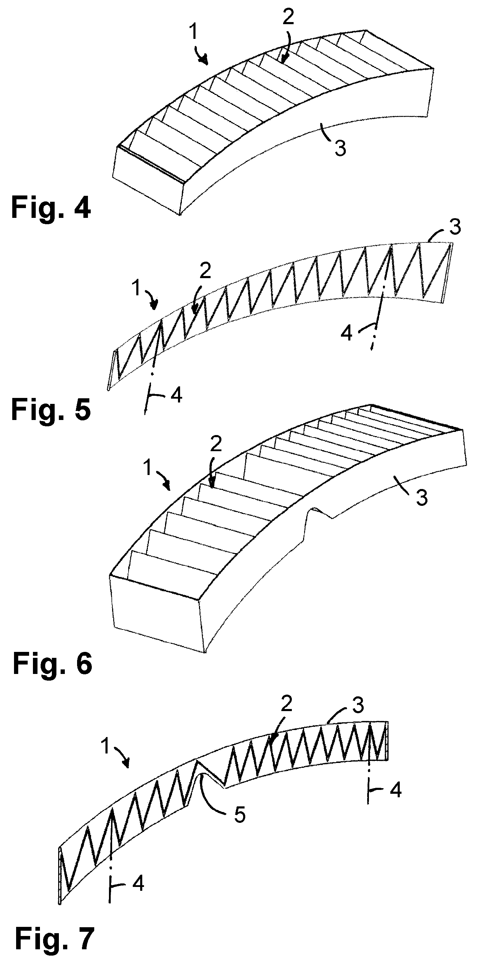

Im Ausführungsbeispiel gemäß Fig. 1 bis 3 besitzt der Filtermediumkörper 2 eine konstante Dicke, so dass die Anströmseite und die Abströmseite, die in Richtung der Winkelhalbierenden 4 durchströmt werden, parallel bzw. konzentrisch zueinander verlaufen. Im Ausführungsbeispiel gemäß den Fig. 4 und 5 ist dagegen der Filtermediumkörper 2 mit einer über seine Länge nicht-konstanten Dicke versehen, wobei die Dicke zwischen Anström- und Abströmseite im Bereich der kleinsten Krümmung (rechter Bildrand) am größten und im Bereich der größten Krümmung (linker Bildrand) am geringsten ist. Die Winkelhalbierenden 4 verlaufen für sämtliche Faltentaschen des Filtermediumkörpers 2 parallel zueinander.

Das Ausführungsbeispiel gemäß Fig. 6 und 7 entspricht im Wesentlichen demjenigen gemäß Fig. 1 bis 3 mit einem Filtermediumkörper 2 mit einer über seine Länge konstanten Dicke, wobei die Winkelhalbierenden 4 durch sämtliche Faltentaschen des Filtermediumkörpers parallel zueinander verlaufen. In das Filterelement 1 ist eine Einkerbung 5 eingebracht, die sich in Längsrichtung zumindest annähernd in der Mitte des Filterelements befindet. Die Einkerbung 5 ist in den Filterrahmen 3 eingebracht, der Filtermediumkörper 2 weist im Bereich der Einkerbung 5 eine Falte mit verhältnismäßig großem Öffnungswinkel auf, so dass diese Falte die Einkerbung 5 überbrückt. Die Faltentasche der überbrückenden Falte sowie ggf. auch eine unmittelbar benachbarte Faltentasche weisen eine Winkelhalbierende auf, die zu den sonstigen Winkelhalbierenden 4 einen Winkel einschließt. Jedoch ist auch bei der überbrückenden bzw. unmittelbar benachbarten Falte gewährleistet, dass eine innerhalb der V-Form liegende Achse parallel zur Winkelhalbierenden der übrigen Faltentaschen verläuft, so dass über sämtliche Falten eine einheitliche Anströmungs- und Durchströmungsrichtung sowie Entformungsrichtung gegeben ist.

## Patentansprüche

1. Filterelement für eine Filtereinrichtung, insbesondere einen Luftfilter, mit einem faltenförmigen, gekrümmten Filtermediumkörper (2), der von einem im Spritzgussverfahren angeformten, gekrümmten Filterrahmen (3) eingefasst ist, wobei die Falten des gekrümmten Filtermediumkörper (2) in der Weise zueinander ausgerichtet sind, dass Faltentaschenachsen innerhalb von benachbarten V-förmigen Faltentaschen, welche zur gleichen Seite des Filtermediumkörpers (2) geöffnet sind, parallel zueinander verlaufen.

2. Filterelement nach Anspruch 1, **dadurch gekennzeichnet, dass** die parallelen Faltentaschenachsen jeweils durch den Faltengrund der Faltentaschen verlaufen.

3. Filterelement nach Anspruch 1 oder 2, **dadurch gekennzeichnet, dass** die parallelen Faltentaschenachsen zwischen Faltenspitzen unmittelbar benachbarter Faltentaschen verlaufen, die in entgegengesetzter Richtung geöffnet sind.

4. Filterelement nach einem der Ansprüche 1 bis 3, **dadurch gekennzeichnet, dass** der Höhenversatz durch die Krümmung mindestens einer halben Faltenhöhe entspricht.

5. Filterelement nach einem der Ansprüche 1 bis 4, **dadurch gekennzeichnet, dass** die Faltentaschenachsen die Winkelhalbierenden (4) sind und die Winkelhalbierenden (4) durch die V-Form der Falten parallel zueinander ausgerichtet sind.

6. Filterelement nach einem der Ansprüche 1 bis 5, **dadurch gekennzeichnet, dass** die Achsen durch sämtliche Falten parallel zueinander ausgerichtet sind.

7. Filterelement nach einem der Ansprüche 1 bis 6, **dadurch gekennzeichnet, dass** der Winkel der V-Form der Falten sich über die Länge des Filtermediumkörpers (2) ändert.

8. Filterelement nach einem der Ansprüche 1 bis 6, **dadurch gekennzeichnet, dass** der Winkel der V-Form der Falten über die Länge des Filtermediumkörpers (2) konstant ist.

9. Filterelement nach einem der Ansprüche 1 bis 8, **dadurch gekennzeichnet, dass** über die Länge des Filtermediumkörpers (2) die Krümmung konstant ist.

10. Filterelement nach einem der Ansprüche 1 bis 8, **dadurch gekennzeichnet, dass** über die Länge des Filtermediumkörpers (2) sich die Krümmung ändert.

11. Filterelement nach einem der Ansprüche 1 bis 10, **dadurch gekennzeichnet, dass** die Dicke des Filtermediumkörpers (2) zwischen der Anström- und der Abströmseite über einen Teilbereich oder die gesamte Länge des Filtermediumkörpers (2) gleich ist.

12. Filterelement nach einem der Ansprüche 1 bis 10, **dadurch gekennzeichnet, dass** die Dicke des Filtermediumkörpers (2) sich über einen Teilbereich oder die Länge des Filtermediumkörpers (2) ändert.

13. Filterelement nach einem der Ansprüche 1 bis 12, **dadurch gekennzeichnet, dass** an der Anström- und/oder der Abströmseite des Filterelements (2) eine Einkerbung (5) eingebracht ist.

14. Verfahren zum Herstellen eines Filterelements (1) nach einem der Ansprüche 1 bis 13, bei welchem der faltenförmige, gekrümmte Filtermediumkörper (2) in einem Spritzgussverfahren mit dem gekrümmten Filterrahmen (3) eingefasst wird.

15. Filtereinrichtung mit einem Filterelement (1) nach einem der Ansprüche 1 bis 13 und einem Filtergehäuse zur Aufnahme des Filterelements (1).
